# EUROPEAN PATENT APPLICATION

(11) **EP 1 471 532 A1**
(43) Date of publication of application: **27.10.2004**
(21) Application number: 04251845.6
(22) Date of filing: 29.03.2004
(51) Int. Cl.: G11B 27/10, G11B 27/00

(54) **Modulated output of digital audio signals**

(30) Priority: 31.03.2003 GB 0307448
(71) Applicant: MATSUSHITA ELECTRIC INDUSTRIAL CO., LTD., Kadoma-shi, Osaka 571-8501 (JP)
(72) Inventor: Page, Mike, Wokingham, Berkshire RG40 3NL (GB)
(74) Representative: Dawson, Elizabeth Ann

(57) **Abstract**

A digital audio reproduction system has a manual control input, e.g. rotary encoder, to control the audio output to achieve interesting audio effects. A forward turn causes data to be skipped whilst a reverse turn causes data to be repeated, all the time the direction of play being forward.

## Description

The present invention relates to method and apparatus for modulating digital audio signals more specifically, but not exclusively, audio signals which have been broadcast.

The advent of digital television transmissions and DVD has resulted in an interest in efficient methods of recording digital signals representing video and audio. For example, US-A-4,963,995 discloses a digital recording technique which stores the recorded broadcast in a random access memory comprising the combination of a semi-conductor RAM buffer and a disc memory, permitting a desired programming segment to be immediately accessed and viewed without the time consuming fast-forward and fast-reverse tape motion required in conventional tape recorders.

It is also known that with record players it is common to manually alter the speed of rotation of the turntable and/or to replay the same portion over and over again. This is known as "scratching".

WO-A-02/103671 discloses a digital music player in which a predetermined amount of an audio signal in digital format is stored and the reproduction position and/or direction and/or speed is automatically modulated with respect to the rhythm using control information in different predetermined ways based on information concerning the musical tempo.

There are known systems for providing something having the feel of a scratch facility for use with a CD player. One example is shown in WO-A-97/01168, which has a turntable that can be rotated to determine the speed and direction of reproduction of an external audio signal from e.g. a CD player.

It is an object of the present invention to provide a system for modulating audio signals and particularly broadcast audio signals in a relatively inexpensive and convenient fashion which will permit manual intervention in the audio output.

The digital audio system of the present invention is described in annexed claim 1. Preferred features of the invention are described in the subsidiary claims.

The invention has been devised for use with digital sources such as CD players and digital audio broadcast, but it will be appreciated that it could be used with any sound source provided that it is converted into digital signals.

It will be clear from claim 1 that instead of producing an audio effect that accurately reproduces the effect of scratching a vinyl disc, the present invention adopts a simpler approach. This nevertheless produces interesting and pleasing audio effects.

The manually operable input means is preferably movable in forward and reverse directions, and may comprise a rotary knob or linear slide, coupled to an encoder to translate movement into an electrical signal.

The amount of data to be omitted/replayed can then be determined by the size of movement. Thus, in contrast to a simple fast forward/fast rewind mechanism, the user can closely control the amount of data to be omitted or replayed down to fractions of a second.

In order that the present invention be more readily understood, an embodiment thereof will now be described by way of example with reference to the accompanying drawings in which:

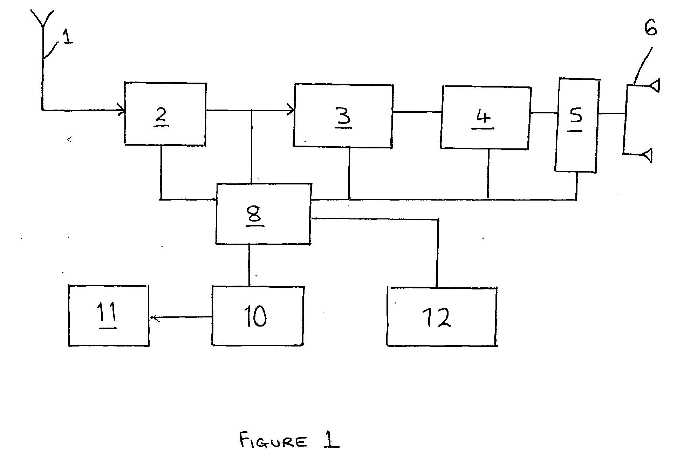

Figure 1 shows a block diagram of a digital audio system according to the present invention; and
Figure 2 illustrates schematically the operation of the manual input arrangement.

A typical apparatus according to the preferred embodiment is a digital audio broadcast radio and comprises an antenna 1 which receives broadcast signals which have been encoded according to a desired broadcast standard. The signals are demodulated by a demodulation circuit 2 and then supplied to a decoding circuit 3. In this case, the decoder is an audio decoder for decoding audio signals transmitted using a suitable compression and coding system. After decoding, a small proportion of the received signal is stored in a first-in-first out (FIFO) buffer store 4 and then output to digital to analog converter 5 which in turn feeds one or more output devices which in this case are shown as speakers 6.

The demodulator circuit 2, FIFO store 4, decoding circuit 3 and digital to analog converter 5 are all normally controlled by a CPU 8 in a manner which is well known.

In the embodiment of the present invention, the CPU 8 is provided with an input circuit 10 arranged to receive signals from a device which is manually controlled by the user. Advantageously, the device is a rotary encoder 11 as this will more closely resemble the record turntable normally used for "scratching" but a linear device or any other suitable manually operable input control device may be used.

When the encoder 11 is used, it causes the CPU to alter the timing of the reading out of the store 4 as will be described in more detail below. The data in the store will be held during this operation. Once the encoder is returned to its initial condition or is switched off, the received broadcast continues to be reproduced.

In order to achieve this with a broadcast signal, in this embodiment the CPU has a further storage facility to store the incoming broadcast while "scratching" is taking place and this further storage is indicated by reference numeral 12.

The CPU 8 controls the buffer store 4 and the storage 12 such that while one is being user-controlled, the incoming broadcast is automatically stored in the other so that as soon as the user stops manipulating the encoder 11, normal operation in real time continues.

The above apparatus can be added to by including a facility to allow a removable recording media to be used to input digital signals. One convenient way of doing this would be to include an SD card slot which would allow prerecorded data to be input instead of broadcast data. This could be further modified to allow data to be received via a USB port in a similar fashion.

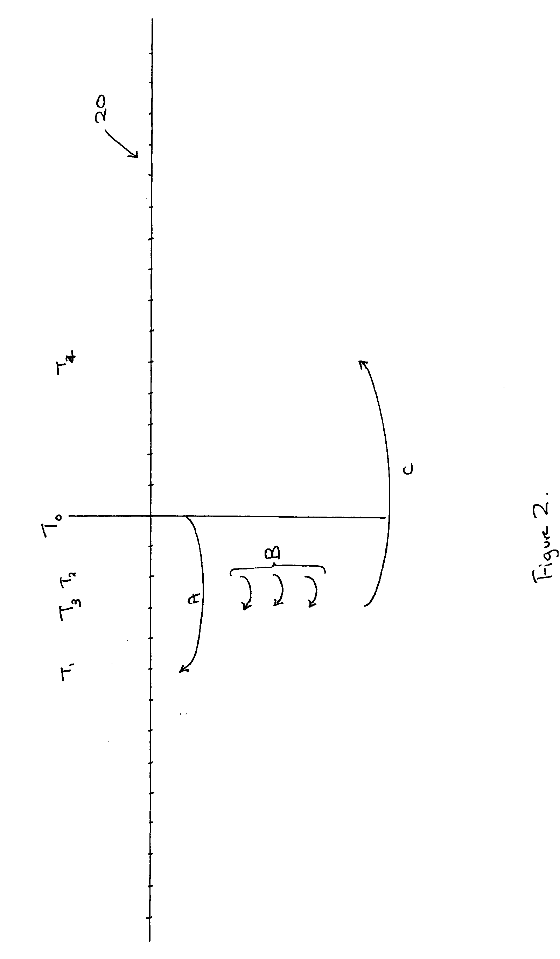

The effect of moving the rotary encoder will now be described with reference to figure 2. Firstly, by way of background, the operation of the decoder (block 5) needs to be borne in mind. The digital signals are arranged in frames which in the MPEG and DAB standards have a 24ms duration. After playing one frame the decoder 5 looks to see which frame it should play next. During use of the rotary encoder, this is determined by the instantaneous position of the rotary encoder. The horizontal line indicated by reference numeral 20 represents an audio data stream, arbitrarily divided into blocks, each of which in this example lasts of the order of one tenth of a second during normal play. Suppose now that the rotary encoder is turned anticlockwise (back) at time To, as indicated by arrow A. This results in a portion of data being replayed, the size of the portion depending on the size of the turn. Whilst the encoder is being turned occasional single frames may be reproduced if the motion is slow, and consecutive frame reproduction recommences at time T₁. The encoder may be turned back again before the whole section between T₁ and T₀ is replayed, e.g. at T₂ as indicated by arrows B. Several small backward turns may cause the same small section to be repeated causing an interesting audio effect similar to a stammer.

A large fast clockwise (forward) turn as shown by arrow C will cause a large portion of data between T₃ and T₄ to be omitted. If the forward turn is executed slowly, again occasional single frames may be reproduced according to the instantaneous position of the encoder. This is equivalent to a periodic portion of the data being omitted, e.g. a fraction of each block with the size of the fraction being determined by the speed of motion of the encoder up to a maximum or threshold value at which a section of data will be omitted completely.

It should be noted that in this embodiment of the invention the direction of play is always forward, furthermore there is no overall variation of playback speed thereby simplifying the system as compared to previous attempts to accurately emulate scratching.

## Claims

1. A digital audio system comprising means for reproducing digital audio signals from a signal source controlled by a control device, **characterised in that** the control device is provided with a manually operable input arrangement which is movable in two directions such that movement in a first direction causes the reproduction of a portion of the signals to be omitted and movement in a second direction causes the reproduction of a portion of the signals to be repeated.

2. A system as claimed in claim 1 in which the manually operable input means is movable in forward and reverse directions to control the reproduction of the audio signals.

3. A system as claimed in claim 1 or 2 in which the movement of the manually operable input arrangement causes the omission of a periodic portion of the signal, with the size of the portion depending on the rate of movement.

4. A system as claimed in claim 3 in which if the rate of movement in the first direction exceeds a predetermined threshold, a complete section of audio signal is omitted.

5. A system as claimed in any preceding claim in which the amount of movement of the manually operable input arrangement determines the size of the portion of the audio signal to be repeated or omitted.

6. A system as claimed in any preceding claim in which consecutive reproduction of the audio signals recommences when any movement of the manually operable input arrangement has ceased, from a point determined by the amount of movement of the manually operable input arrangement.

7. A digital audio system as claimed in any preceding claim in which the signal source is a removable digital memory device.

8. A digital audio system as claimed in any of claims 1 to 6 in which the signal source is a broadcast signal, further comprising a buffer memory for storing a portion of the most recently broadcast signals.
